# EUROPEAN PATENT APPLICATION

(11) **EP 4 554 063 A1**
(43) Date of publication of application: **14.05.2025**
(21) Application number: 24211376.9
(22) Date of filing: 07.11.2024
(51) Int. Cl.: H02K 5/18, H02K 5/20, H02K 21/24

(54) **AXIAL-FLOW ELECTRIC MACHINE**

(30) Priority: 09.11.2023 IT 202300023691
(71) Applicant: Texa Dynamics S.R.L., 31050 Monastier di Treviso (TV) (IT)
(72) Inventor: VIANELLO, Bruno, 31050 Monastier di Treviso (TV) (IT); GIACOMETTI, Massimiliano, 31050 Monastier di Treviso (TV) (IT)
(74) Representative: Studio Torta S.p.A.

(57) **Abstract**

An axial-flow electric machine (1) comprising a stator assembly (2), a pair of circular plate-shaped rotors (4) that comprise an outer perimeter edge (4d) and are housed in an outer casing (7) on axially opposite sides, a central shaft-motor (3) coupled to the circular plate-shaped rotors (4), and a pair of circular cooling radiators (10), which are fixed on the axially opposite ends of the outer casing (7) in order to be adjacent to and flush with the respective circular plate-shaped rotors (4) so as to cool them by convection.

## Description

### CROSS-REFERENCE TO RELATED APPLICATIONS

This patent application claims priority from Italian patent application no. 102023000023691 filed on November 9, 2023, the entire disclosure of which is incorporated herein by reference.

### TECHNICAL FIELD

This invention relates to an axial-flow electric machine. In particular, this invention relates to an electric machine preferably corresponding to an axial-flow electric motor that is provided with two annular cooling radiators; to which the discussion below will explicitly refer without losing any generality thereby.

### PRIOR ART

It is known that, in recent years, so-called "axial-flow" electric machines have had significant success, thanks both to the especially "flat" structure, which reduced its axial dimensions, and the technical performance achieved, which is very high, for example in terms of torque, power, and speed.

These peculiarities have ensured that axial-flow electric machines are especially well adapted to being used with great versatility in a number of technical sectors, including, for example, motor vehicle propulsion systems and power generation systems.

In any case, known axial-flow electric motors, as well as having great construction complexity that entails significant time and cost in terms of construction and assembly, have technical critical issues relating to cooling.

To this end, several solutions were devised, some of which are described, for example in CN102075041 and CN210927259. Today, these solutions are not completely satisfactory for fulfilling the above-mentioned needs in the technical fields.

### DESCRIPTION OF THE INVENTION

The purpose of this invention is, thus, to provide an axial-flow electric machine that is equipped with a simple and highly performing cooling system that is cost-effective to produce.

In accordance with this purpose, according to this invention, an axial-flow electric machine is produced according to what is defined in the corresponding independent claims and, preferably but not necessarily, in any of the dependent claims.

The claims describe preferred embodiments of this invention and form an integral part of this description.

### BRIEF DESCRIPTION OF THE DRAWINGS

This invention will now be described with reference to the attached drawings that illustrate a non-limiting embodiment thereof, in which:
- Figures 1 and 2 are two perspective side views from axially opposite sides, of an axial-flow electric machine produced according to this invention,
- Figure 3 is an exploded view of the axial-flow electric machine shown in Figures 1 and 2,
- Figure 4 is a perspective view, with parts removed for clarity, of the axial-flow electric machine shown in Figures 1 and 2,
- Figure 5 is a perspective view of a radiator and of the axial-flow electric machine shown in Figures 1 and 2,
- Figure 6 is a side elevation view of a plate of the cooling radiator of the axial-flow electric machine shown in Figures 1 and 2,
- Figure 7 is a perspective view of the cooling radiator shown in Figure 5 with a portion in cross section according to the cross-section line VII-VII in Figure 5,
- Figure 8 is a side perspective view, with parts removed for clarity, of the axial-flow electric machine shown in Figures 1 and 2,
- Figure 9 is a perspective view of the axial-flow electric machine, with an upper portion in cross section according to the cross-section line IX-IX of the machine shown in Figure 2,
- Figure 10 is a side perspective view of a cooling radiator of the axial-flow electric machine according to one embodiment,
- Figure 11 is a cross section across a plane orthogonal to the axis A of the cooling radiator shown in Figure 10,
- Figure 12 is a cross section taken across a plane parallel to the axis A of the cooling radiator shown in Figure 10,
- Figure 13 is a perspective view of a cooling radiator of the axial-flow electric machine according to one embodiment,
- Figure 14 is a cross section taken across a plane orthogonal to the axis A of the cooling radiator shown in Figure 3,
- Figure 15 is a cross section on an enlarged scale of the cooling radiator shown in Figure 13,
- Figure 16 is a perspective view of a cooling radiator of the axial-flow electric machine according to one embodiment,
- Figure 17 is a longitudinal section of the cooling radiator shown in Figure 16,
- Figure 18 is a cross section of the cooling radiator shown in Figure 16,
- Figure 19 is a perspective view of a cooling radiator of the axial-flow electric machine according to one embodiment,
- Figure 20 is a longitudinal section of the cooling radiator shown in Figure 19.

### PREFERRED EMBODIMENTS OF THE INVENTION

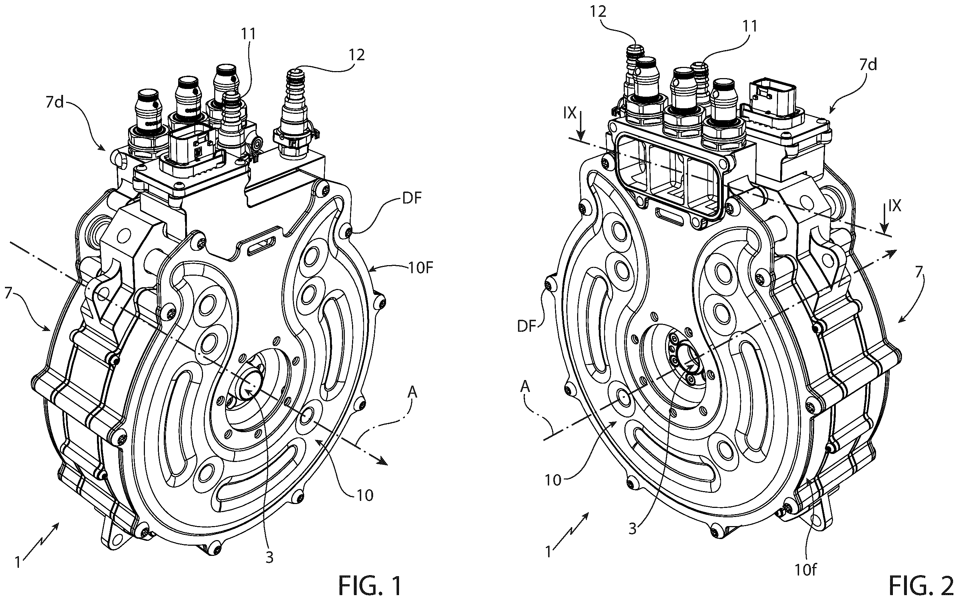

Figures 1 and 2 show an electric machine that is the subject of this invention. Conveniently, the electric machine illustrated in Figures 1 and 2 is an axial-flow electric machine. In the embodiment shown in the attached figures, the electric machine is an axial-flow electric motor 1. It is understood that the present invention is not limited to electric motors, but is also applicable to other different configurations wherein, for example, the axial-flow electric machine is configured to generate electric power and operates as an electric generator.

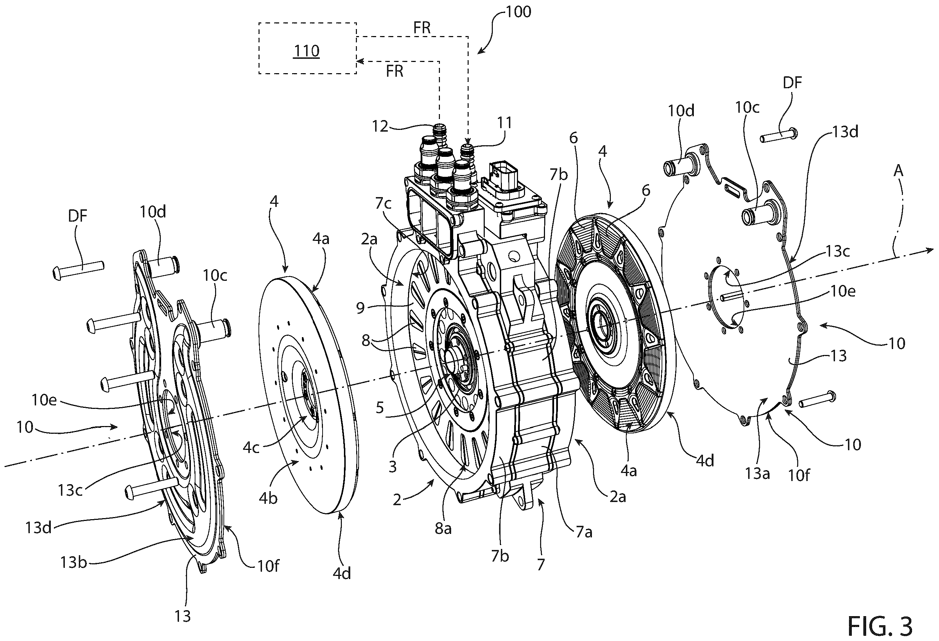

According to a preferred embodiment shown in Figure 3, the electric motor 1 comprises a stator assembly 2 that has, centrally, an axis A, used in the description that follows as a reference axis of the motor, and a motor-shaft 3 that extends coaxial to the axis A and is designed to rotate in use around the axis. The stator assembly 2 has two side walls 2a that are axially opposite to each other along the axis A and are orthogonal to it.

According to the preferred embodiment shown in Figure 2, the electric motor 1 also comprises two rotors 4. The rotors 4 are plate-like and have a substantially circular shape (circular plate-shaped rotors). The rotors 4 are arranged on axially opposite sides of the stator assembly 2 (along the axis A) and are configured, in use, to rotate around the axis A with respect to the stator assembly 2. The rotors 4 are firmly coupled to the shaft-motor 3 so as to rotate it around the axis A and are arranged on planes orthogonal to the axis A. In the example illustrated, the two rotors 4 have a disc-like, planar shape and have an outer perimeter edge 4d. In the example illustrated, the two rotors 4 also have a substantially annular shape and an inner perimeter edge 4c. In the example illustrated, the inner perimeter edge 4c of the rotors 4 delimits a through opening crossed by the shaft-motor 3. In the example illustrated, the inner perimeter edge 4c of the rotors 4 is coupled with the shaft-motor 3.

According to the embodiment illustrated in Figure 3, the stator assembly 2 has an approximately cylindrical external shape, a basically annular cross-section orthogonal to the axis A, and has, centrally, a circular through opening 5 that extends along the axis A coaxially to it and is crossed by the motor-shaft 3.

The rotors 4 are coaxial to the axis A, have a cross section orthogonal to the axis A that is approximately circular, and are arranged facing (adjacent to) the respective side walls 2a opposite the stator assembly 2. In the example illustrated, the rotors 4 are rigidly, centrally coupled with the shaft-motor 3 so as to rotate it and have an inner wall or face 4a that is substantially flat (planar) that faces a corresponding side wall 2a of the stator assembly 2, and multiple magnets 6. The magnets 6 may have a plate-like shape, be preferably permanent, and arranged firmly on the face 4a, preferably in positions equally angularly spaced apart, along a circumferential line coaxial to the axis A, conveniently with sequential, alternating polarities.

The rotors 4 may preferably consist of flat and circular plates based on ferromagnetic material, for example steel or the like. The rotors 4 are designed, in use, to be rotated with respect to the stator assembly 2 (that remains still) in response to the electromagnetic interaction between the magnets 6 and the axial magnetic fields generated by the stator assembly 2 according to electromagnetic principles that are known and, therefore, not described in detail.

With reference to a preferred embodiment shown in Figure 2, the stator assembly 2 comprises an outer cover or casing 7, multiple stator elements 8, and a stator support body 9 that is arranged (fitted) inside the casing 7 and houses the stator elements 8. The stator support body 9 is preferably also configured so as to cool the stator elements 8.

With reference to the embodiment shown in Figure 3, the stator elements 8 may each comprise an internal core made of ferromagnetic material formed, for example, from a pack of stampings that extends along an axis basically parallel to the axis A, an external electric coil (not illustrated) made of electrically conductive material (copper or the like) that is wound around the core 8a, preferably via the interposition of a tubular layer (not illustrated) of electrically insulating, preferably rigid, material that wraps around the core 8a. The stator element 8 may be conveniently made, for example, according to what is described in the international patent application WO2021064621 A1 of the Applicant, the content of which is understood to be completely incorporated here by reference.

According to a preferred embodiment shown in Figures 1-3, the casing 7 comprises a central wall 7a that has an approximately annular shape, which is arranged coaxial to the axis A and houses the stator support and cooling body 9 inside. In the example illustrated, the casing 7 also comprises two side annular flanges 7b that are basically flat (plate-shaped and planar) that are arranged coaxial to the axis A on axially opposite sides of the wall 7a and are connected, along the perimeter, to the wall 7a, by means of the fastening devices DF (for example, screws).

According to a preferred embodiment shown in Figures 1-7, the electric motor 1 also comprises a pair of cooling radiators 10 with a circular shape (circular cooling radiators). The radiators 10 have a substantially planar shape and extend circumferentially around the axis A. The radiators 10 are fixed to the opposite ends of the casing 7 so as to be adjacent to the respective rotors 4 so as to cool them by convection.

Each radiator 10 is configured in order to be crossed inside by a cooling fluid FR along a circumferential path C around the axis A. The cooling fluid FR is, conveniently, a cooling liquid.

Conveniently, the radiators 10 may have an annular shape and are made of thermally conductive material, preferably metal such as, for example, aluminium or copper or the like. In the example illustrated in Figure 3, a radiator 10 is arranged close to the face 4b of a rotor 4 axially opposite its face 4a; the other radiator 10 is arranged close to the face 4b of the other rotor 4 opposite its face 4a.

According to the preferred embodiment shown in Figures 1, 2, and 3, the radiators 10 are firmly coupled respectively to the two opposite, annular side flanges 7b of the casing 7. The radiators 10 are shaped in order to delimit with the inner annular edges of the side flanges 7b and with the two side walls 2a of the stator assembly 2, two inner circular chambers 7c (Figure 3) each of which is sized/structured in order to seat a rotor 4 inside. Each radiator 10 is shaped so that it has an inner circular edge 10e that delimits a central through opening crossed by the shaft-motor 3 and an outer circular edge 10f that is approximately adjacent to the outer perimeter edge 4d of the rotor 4.

The radiator 10 is configured to have a radial extension, which is perpendicular to the circumferential path C, between the inner circular edge 10e and the outer circular edge 10f to ensure that the cooling fluid FR flows inside the radiator 10 substantially in contact both with the inner circular edge 10e and the outer circular edge 10f along the corresponding circumferential path C.

According to a preferred embodiment shown in Figure 3, the electric motor 1 also comprises two outer hydraulic connectors 11 and 12 that are coupled to the casing 7 and are configured so as to be hydraulically connected by means of a circuit 100 with a motor cooling system 110 (cooling assembly). The motor cooling system 110 is, preferably, independent of and separate from the electric motor 1. The motor cooling system 110 is configured so as to treat the cooling fluid FR in order to cool it to a predetermined cooling temperature and supplies it with a predetermined pressure/flow rate to a hydraulic connector 11 or 12 in order to make it circulate in the annular radiators 10. The motor cooling system 110 is also configured in order to receive the cooling fluid FR from the other hydraulic connector 12 or 11 (when the fluid is heated by the heat transmitted by the rotors 4 to the annular cooling radiators 10) that has a greater temperature than the cooling temperature.

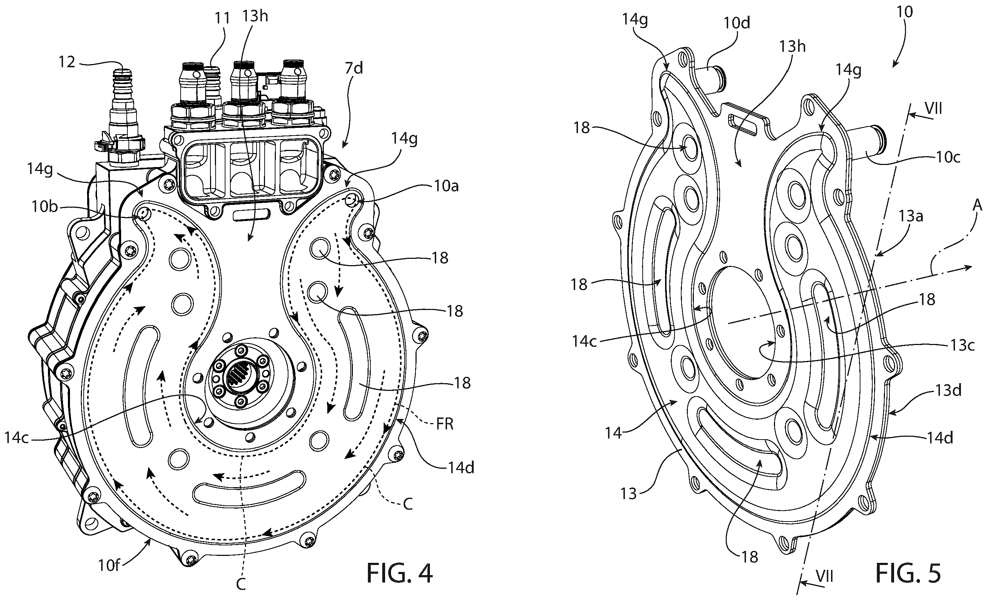

According to a preferred embodiment shown in Figures 4-7, the radiator 10 comprises at least one flange or annular plate 13. The annular plate 13 lies on a plane orthogonal to the axis A, and has two larger faces 13a and 13b that are axially opposite, an inner circular edge 13c defining the central through opening crossed by the shaft-motor 3, and an outer perimeter edge 13d stably firmly coupled to the casing 7 by means of the fastening devices DF. In the example illustrated, the inner circular edge 13c substantially defines the inner circular edge 10e of the radiator 10. The outer circular edge 13d substantially defines the outer circular edge 10f of the radiator 10.

As shown in Figures 4-7, the radiator 10 also comprises a cooling circuit 14 that is connected with the annular plate 13 and extends around the axis A along the circumferential path C.

The circular cooling circuit 14 is shaped in order to extend, in addition to along the circumferential path C, also radially in order to have an inner circular side 14c adjacent to the inner perimeter edge 13c of the annular plate 13 and an outer circular side 14d adjacent to the outer perimeter edge 13d of the annular plate 13 in order to cause the cooling fluid FR to flow into the cooling circuit 14 substantially in contact both with the inner perimeter edge 13c and the outer perimeter edge 13d along the circumferential path C.

With reference to Figure 4, the cooling circuit 14 of the radiator 10 has an inlet 10a preferably hydraulically connected to the connector 11 to receive the cooling fluid FR (cooled) and an outlet 10b preferably hydraulically connected to the connector 12 to provide it with the cooling fluid FR (hot).

According to the preferred embodiment shown in the attached figures, the cooling circuit 14 is configured in order to extend around the axis A in a radial way so as to be in contact with the surface of the annular plate 13 between its inner edge 13c and its outer edge 13d.

The Applicant has found that the radial extension of the cooling circuit 14 on the surface of the annular plate 13 between the inner edge 13c and the outer edge 13d determines, on the one hand, homogeneous cooling across the whole surface of the rotor 4 and, on the other hand, an increase in heat removal by convection by the rotor 4.

According to a preferred embodiment shown in Figures 4-7, the cooling circuit 14 extends inside the body of the disc-shaped plate 13 in order to approximately have the shape of an omega (upside down in the attached figures) wherein the two opposite ends 14g are spaced apart. The opposite ends 14g do not extend above an upper central free portion 13h (a segment) of the annular plate 13 that is arranged immediately below the upper central part 7d of the casing 7.

According to the preferred embodiment shown in Figures 1-9, the cooling circuit 14 consists of a interspace 16 made in the annular plate 13. The interspace 16 is shaped so as to extend inside the disc-shaped plate 13 along the circumferential path C and has the two ends that are separate/spaced apart and are arranged near the upper central free portion 13h of the upper part 7d of the casing 7. The two ends of the interspace 16 extend so as to form the two ends 14g of the cooling circuit 14.

The interspace 16 is shaped in order to extend radially between the inner circular side 14c adjacent to the inner perimeter edge 13c and the outer circular side 14d adjacent to the outer perimeter edge 13d of the annular plate 13. The interspace 16 is also sized in order to have a reduced inner height (measured along the axis A), conveniently by the order of approximately 1.5 mm.

The Applicant has found that the substantially continuous radial extension of the interspace 16 inside the annular plate 10 between the inner edge 13c and the outer edge 13d determines strong cooling homogeneity of the rotor 4 and an increase in its cooling surface.

With reference to the preferred embodiment shown in Figures 1-7, the annular plate 13 may consist of two plates 13e and 13f (sheets) of a reduced thickness (thin) that are firmly coupled together with the relative inner faces so as to form a sandwich, and are shaped to as to form (delimit) inside the interspace 16.

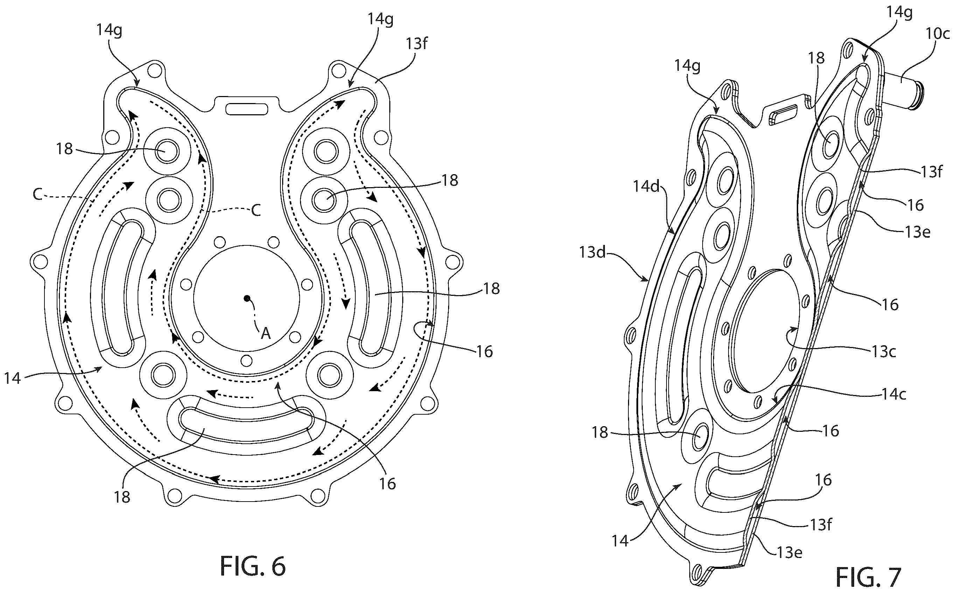

In the example illustrated in Figure 4 and 6, the plate 13e is substantially plane/flat, while the plate 13f is bulged (has a cavity) in the opposite direction with respect to the plate 13e in order to form the shape of the interspace 16. Conveniently, the coupling between the plates 13e and 13f and the creation of the interspace 16 between them may be obtained by means of a Roll-BOND process that comprises the steps of lamination, gluing (for example by means of an adhesive/paint material), compression, and inflation with pressurised air between the plates (Roll-BOND process).

Conveniently, the annular plate 13 has the plane/flat plate 13e facing the rotor 4 (Figures 3 and 4), while the plate 13f is convex along the cooling circuit 14 and is arranged on the opposite side of the plate 13e (Figures 1-3 and 5-7) with respect to the rotor 4.

The technical effect obtained is that of reducing the distance between the exchange wall of the radiator 10 and the rotor 4 and increasing its cooling performance.

In any case, it is understood that the present invention is not limited to the embodiment disclosed above, but may, alternatively, provide that the annular plate 13 is coupled to the casing 7 so as to have the convex plate 13f facing the rotor 4 and, vice versa, the plane/flat plate 13e arranged on the opposite side with respect to the rotor 4, outside the casing 7.

It is also understood that this invention is not limited to the embodiment described above but may provide, for example according to a different embodiment (not illustrated), that both plates 13e and 13f are convex towards the outside (in opposite directions from each other) to delimit the gap 16 inside.

With reference to Figures 4-7, the motor 1 comprises perturbing devices 18 (agitators) that are arranged in the interspace 16 along the circumferential path C and are configured so as to cause (produce) turbulent motion in the cooling fluid FR inside the interspace 16 when the cooling fluid FR crosses the latter.

In the embodiment shown in Figure 4, the perturbing devices 18 have a circular shape and/or the shape of a loop that extends parallel to the circumferential path L. In any case, it is understood that that the perturbing devices 18 may have a geometric shape/cross section other than a circular or loop one, such as a square one or the like.

According to the embodiment shown in Figures 6 and 7, the perturbing devices 18 may consist of localised coupling/fastening portions between the plates 13e and 13f. The localised coupling/fastening portions defining the perturbing devices 18 may, conveniently, be arranged on the annular plate 13 between the edges 13c and 13d, preferably so as to be radially positioned approximately at the same distance between them (for example, centrally).

The technical effect obtained, thanks to the perturbing devices 18, is, on the one hand, that of causing turbulent motion agitating the cooling fluid inside the gap 16 along the cooling circuit 14 that increases the cooling performance of the radiator 10 and, on the other hand, of increasing the structural rigidity of the radiator 10 so as to reduce the risk of its being damaged due to the mechanical stresses (vibrations) generated by the rotation of the rotor 4 at high speed.

With reference to Figures 2, 5-9, a radiator 10 conveniently has two side tubular connectors 10c and 10d that are hydraulically connected to the inlet 10a and, respectively, to the outlet 10b, and are engaged in respective tubular channels 19 and 20 formed in the casing 7 so as to hydraulically communicate with them. The tubular channels 19 and 20 may be formed in the upper part 7d of the casing 7 and extend straight, spaced apart from each other and parallel to the axis A.

In the example illustrated, the tubular connectors 10c of the two radiators 10 are straight and extend so they overhang the face 13a of the annular plate 13 towards each other. The tubular connectors 10c of the two radiators 10 are approximately coaxial to each other and are engaged on the opposite ends of the tubular channel 19 so as to hydraulically communicate with the latter. In the example illustrated, the two tubular connectors 10c are rectilinear and extend so they overhang the face 13a of the corresponding annular plate 13 towards each other. The tubular connectors 10d are approximately coaxial to each other and are engaged on the opposite ends of the tubular channel 20 in order hydraulically communicate with the latter.

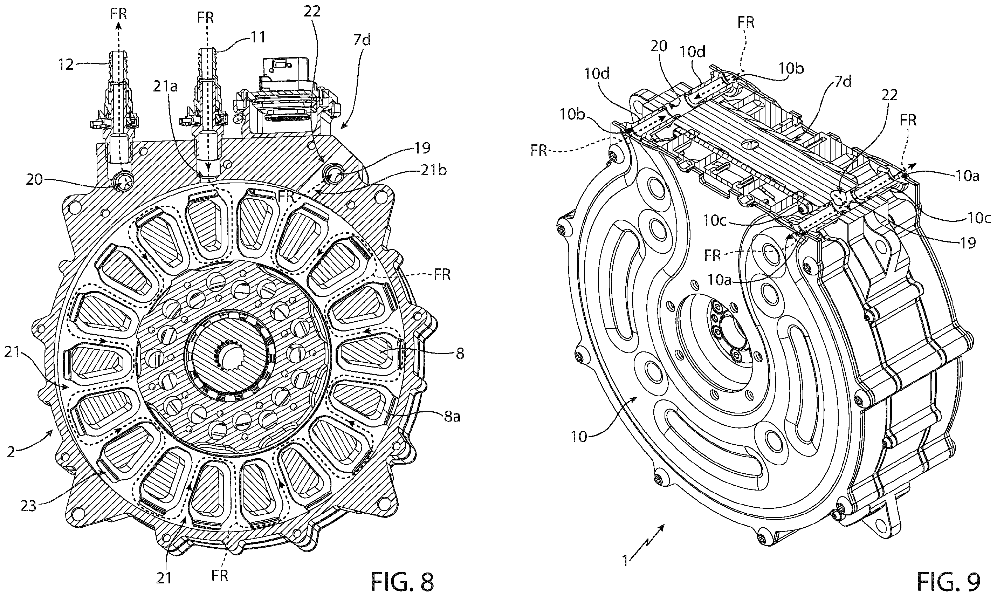

According to the preferred embodiment shown in Figures 8 and 9, the tubular channel 19 is connected to the hydraulic connector 11 in order to receive the cooling fluid FR and, at the same time, supplies it to both annular radiators 10 through the corresponding connectors 10c. The tubular channel 20 is connected to the hydraulic connector 12 so as to provide it with the cooling fluid FR that it receives as it leaves the annular radiators 10 through the corresponding connectors 10d. The annular radiators 10 are, thus, connected to the hydraulic connectors 11 and 12 in order such that the corresponding cooling circuits 14 operate according to a parallel circuit configuration.

According to a possible embodiment shown in Figure 8, the stator support body 9 comprises at least one internal cooling circuit 21 that extends between an inlet 21a and an outlet 21b. In the example shown in Figure 8, the internal cooling circuit 21 is formed from internal ducts hydraulically communicating with each other that extend into the stator support body 9 around stator seats 23 that house the stator elements 8 in order to surround/brush the stator seats 23. The internal cooling circuit 21 extends along a circumferential path around the axis A between the inlet 21a and the outlet 21b. The inlet 21a is connected with the connector 11 to receive the cooling fluid FR. The outlet 21b is hydraulically connected to the tubular channel 19 by means of an intermediate connection 22 to provide it with the cooling fluid FR so as to feed it entering the two annular radiators 10.

The technical effect obtained is that of having a simplified and compact cooling system that makes it possible to cool along a single path both the stator elements 8 and both the rotors 4.

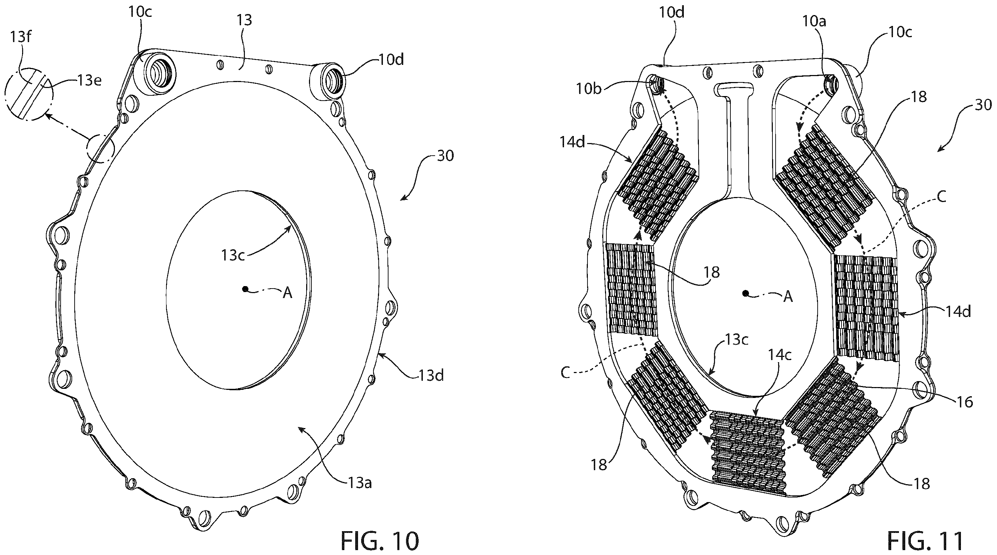

Figures 10-12 show a radiator 30 of an electric motor 1, which is similar to the radiator 10 shown in Figures 1-9, and whose parts will be distinguished, where possible, with the same reference numbers that distinguish corresponding parts of the radiator 10.

The radiator 30 shown in Figures 10-12 differs from the radiator 10 in that both the plates 13e and 13f are substantially flat (without convex roundness).

The radiator 30 shown in Figures 10-12 differs from the radiator 10 in that the interspace 6 has an approximately rectangular cross section and comprises a (grooved) seat formed on the inner face of at least one of the two plates 13e and 13f.

The radiator 30 shown in Figures 10-12 also differs from the radiator 10 in that the perturbing devices 18 in the interspace 16 are shaped in order to have irregular surface portions for contact with the cooling fluid FR that are not smooth. The contact surface portions are irregular so as to create turbulent motion in the cooling fluid FR inside the interspace 16.

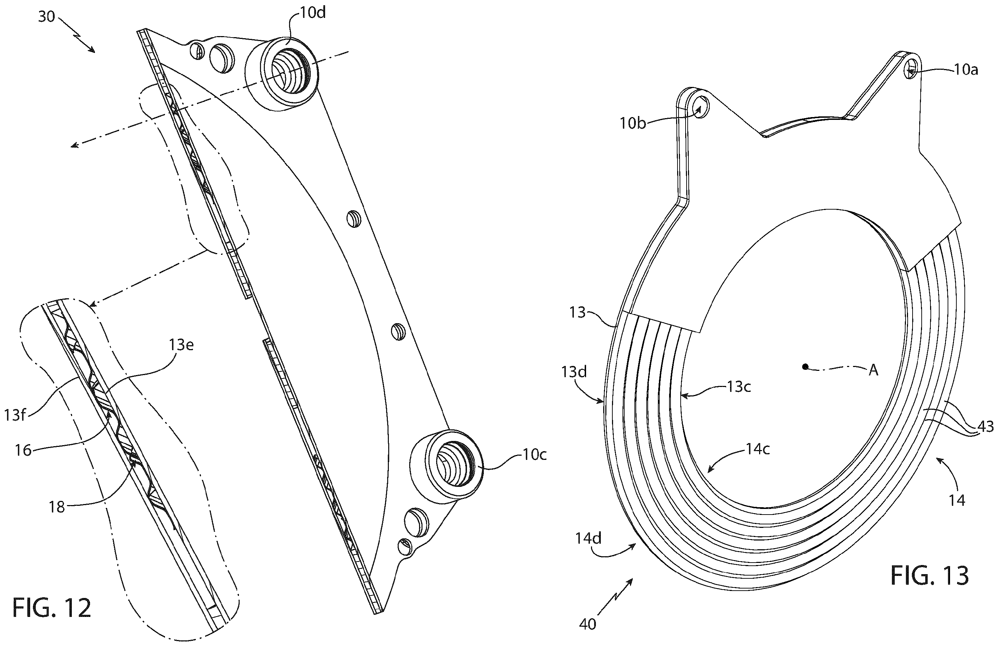

The irregular contact surface portions have a contact surface with the cooling fluid FR that is rough, knurled, corrugated, or the like. The irregular contact surface portions may be formed on the inner face of at least one plate 13e or 13f that delimits the interspace 16 or may comprise, as shown in Figure 12 rough, knurled, or corrugated plates that are firmly fastened inside the interspace 16. Conveniently, the knurled or corrugated surfaces are angularly spaced apart between them around the axis A inside the interspace 16 (Figure 11).

Figures 13-15 show a radiator 40 of an electric motor 1, which is similar to the radiator 10 shown in Figures 1-9, and whose parts will be distinguished, where possible, with the same reference numbers that distinguish corresponding parts of the radiator 10.

The radiator 40 shown in Figures 13-15 differs from the radiator 10 in that the cooling circuit 14 comprises two closed chambers 41 and 42 that are adjacent and separate from each other by means of a central partition 44. The chamber 41 is hydraulically connected to the inlet 10a to receive the cooling fluid FR. The chamber 42 is hydraulically connected to the output 10b to provide the cooling fluid FR.

The radiator 40 shown in Figures 13-15 also differs from the radiator 10 in that the cooling circuit 14 comprises multiple ducts 43 (tubes) that are arranged next to each other, parallel, and coplanar between them and each extends around the axis A so as to form an arc of a circle. The ducts 43 are radially arranged one next to the other in contact with the inner face of the plate 13e between the inner edge 13c and the outer edge 13d of the plate 13e itself. Conveniently, the ducts 43 are radially arranged one next to the other so as to radially cover the whole face of the plate 13e between the inner edge 13c and the outer edge 13d of the plate 13e itself.

The two opposite ends 43a and 43b of each tubular duct 43 are arranged in the chamber 41, to receive the cooling fluid FR coming in, and, respectively, in the chamber 42, to provide the cooling fluid FR. The ducts 43 are hydraulically connected with the two chambers 41 and 42 so as to form multiple channels in parallel between the inlet 10a and the outlet 10b.

The two opposite ends 43a and 43b of each tubular duct 43 project inside the chambers 41 and 42 in order to have a different length to the adjacent tubular duct 43. Conveniently, the lengths of the ends of the tubular ducts 43 inside the chambers 41 and 42 may progressively decrease as the radius of the arcs of a circle of the ducts 43 increases.

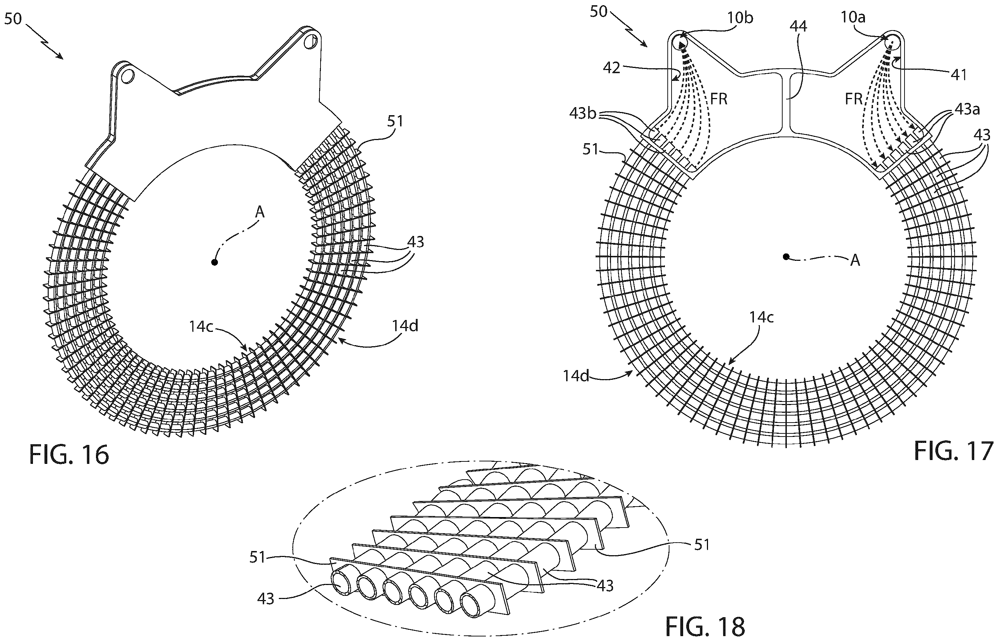

Figures 16-18 show a radiator 50 of an electric motor 1, which is similar to the radiator 40 shown in Figures 13-15, and whose parts will be distinguished, where possible, with the same reference numbers that distinguish corresponding parts of the radiator 40.

The radiator 50 shown in Figures 16-18 differs from the radiator 40 in that it comprises multiple cooling fins 51 that are firmly coupled to the ducts 43 on planes transverse to them.

The radiator 50 shown in Figures 16-18 also differs from the radiator 40 in that the opposite ends 43a and 43b of each tubular duct 43 project inside the chamber 41 and 42 so as to have the same length of the adjacent tubular duct 43.

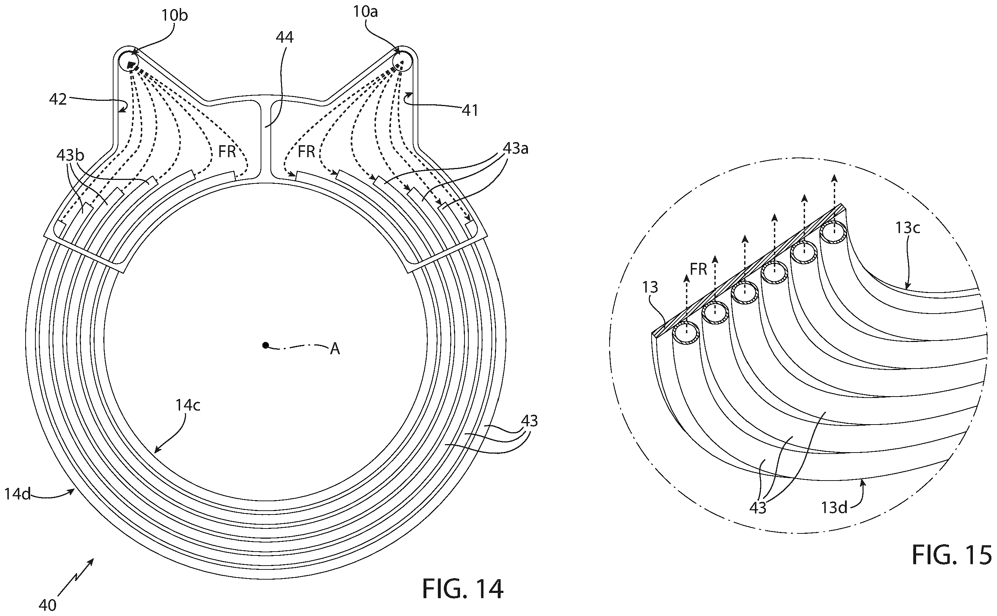

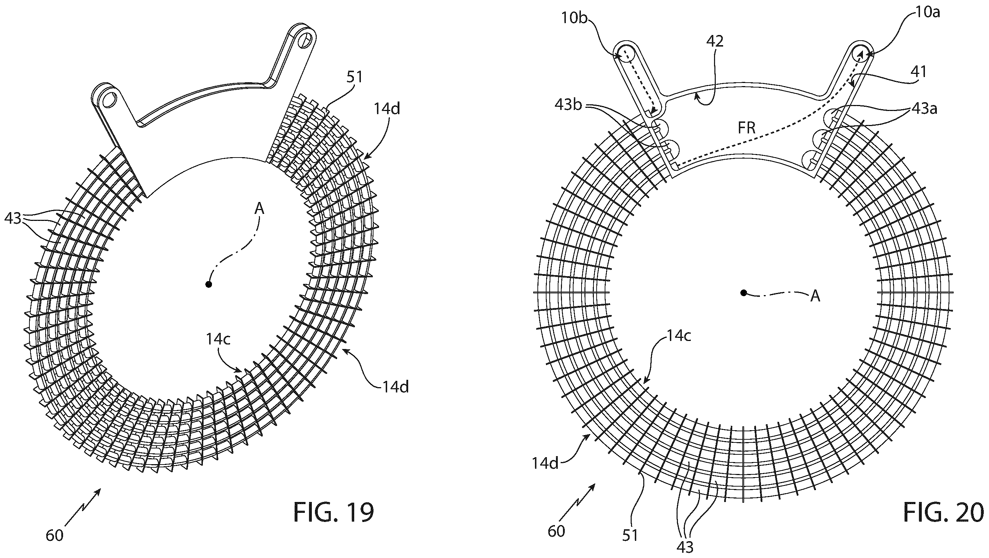

Figures 19 and 20 show a radiator 60 of an electric motor 1, which is similar to the radiator 40 shown in Figures 14 and 15, and whose parts will be distinguished, where possible, with the same reference numbers that distinguish corresponding parts of the radiator 40.

The radiator 60 shown in Figures 19 and 20 differs from the radiator 40 in that the ducts 43 are hydraulically connected to the chambers 41 and 42 between the inlet 10a and the outlet 10b according to a configuration in series. In the chamber 42, the end 43b of a duct 43 is connected in series with the end 43b of the adjacent duct. In the chamber 42 one of the ducts 43, for example the one with the smaller radius, has the open end defining the outlet. In the chamber 41, the end 43a of a duct 43 is connected in series with the end 43a of the adjacent duct. In the chamber 41 one of the ducts 43, for example the one with the larger radius has the open end defining the the inlet for the cooling fluid FR.

## Claims

1. Axial-flow electric machine (1) comprising:
an outer casing (7) of annular shape having a first reference axis (A),
a stator assembly (2) comprising a plurality of stator elements (8), and a stator support body (9) which is stably arranged in said outer casing (7) and is provided with a plurality of stator seats (23) which are arranged angularly spaced each other around said first reference axis (A) and contain respective stator elements (8),
a pair of circular plate-shaped rotors (4) which comprise an outer perimeter edge (4d) and are arranged in said outer casing (7) by axially opposite sides of said stator assembly (2),
a shaft-motor (3) that extends centrally coaxial to said first reference axis (A) and is coupled to said circular plate-shaped rotors (4),
a pair of circular cooling radiators (10) of substantially planar shape, extending circumferentially about the reference axis (A) and are fixed on the axially opposite ends of said outer casing (7) in order to be adjacent to the respective circular plate-shaped rotors (4) in order to cool them by convection,
each circular cooling radiator (10) is configured in order to be flowed through by a cooling fluid (FR) along a circumferential path (C) about the reference axis (A), and is shaped in order to comprise an inner circular edge (10e) surrounding a central through opening traversed by said shaft-motor (3), and an outer circular edge (10f) which is approximately adjacent to the outer perimeter edge (4d) of said circular plate-shaped rotor (4),
the circular cooling radiator (10) is further configured in order to have a radial extension which is perpendicular to said first reference axis (A) and is comprised between said inner circular edge (10e) and said outer circular edge (10f) and is structured in order to cause the cooling fluid (FR) to flow inside the circular cooling radiator (10) in order to be in contact with both the inner circular edge (10a) and the outer circular edge (10f) along said circumferential path (C).

2. Axial-flow electric machine according to claim 1, wherein the circular cooling radiator (10) comprises
an annular plate (13) which has a circular outer perimeter edge (13d) extending about the first reference axis (A) in order to be adjacent to the outer perimeter edge of the rotor (4) and an inner perimeter edge (13c) delimiting said central through opening,
a circular cooling circuit (14) that is associated with the annular plate (13) and extends along said circumferential path (C),
the circular cooling circuit (14) is shaped in order to extend radially in order to have an inner circular side (14c) adjacent to the inner perimeter edge (13c) of the annular plate (13) and an outer circular side (14d) adjacent to the inner outer perimeter edge (13d) of the annular plate (13) in order to cause the cooling fluid to flow into the circular cooling circuit (14) in order to be in contact with both the inner perimeter edge and the outer perimeter edge along said circumferential path.

3. Axial-flow electric machine according to claim 2, wherein said circular cooling circuit (14) extends along said circumferential path (C) within said annular plate (13).

4. Axial-flow electric machine according to claims 2 or 3, wherein said circular cooling circuit (14) comprises an internal cavity (16) extending within said annular plate (13) along said circumferential path (C) about the first reference axis (A) and is shaped in order to extend radially between the inner perimeter edge (13c) and the outer perimeter edge (13d) of the annular plate (13).

5. Axial-flow electric machine according to claim 4, wherein said annular plate (13) comprises at least two plates (13e) (13f), that are coupled together with their inner faces, said internal cavity (16) being formed by padding or molding on at least one of the inner faces delimiting said plates (13e) (13f) .

6. Axial-flow electrical machine according to claim 5, wherein one plate of the two plates (13e)(13f) forming the annular plate (13) has a flat outer larger face orthogonal to the first reference axis (A) which is arranged flush with the said circular plate-shaped rotor (4), the other plate of said two plates (13e)(13f) forming the annular plate (13) being shaped in order to have on its inner face a convexity or groove bounding said internal cavity (16).

7. Axial-flow electrical machine according to claim 4 and any one of claims 5 or 6, comprising fluid disrupting devices which are arranged within said internal cavity (16) along said circumferential path (C) and are configured in order to cause on the cooling fluid turbulent motions within said internal cavity (16).

8. Axial-flow electrical machine according to claim 2, wherein said circular cooling circuit (14) comprises a plurality of circular ducts extending along said circumferential path (C) side by side around said first reference axis (A) and are each designed to be traversed by said cooling fluid.

9. Axial-flow electric machine according to claim 8, wherein said circular cooling circuit (14) comprises a plurality of cooling fins transversely coupled to said circular ducts.

10. Axial-flow electric machine according to claims 8 or 9, wherein said circular ducts are hydraulically connected to each other in series.

11. Axial-flow electric machine according to claims 8 or 9, wherein said circular ducts are hydraulically connected to each other in parallel.

12. Axial-flow electric machine according to any one of the foregoing claims, wherein the circular cooling radiator (10) comprises an inlet to receive the cooling fluid and an outlet to supply the cooling fluid; the inlet and outlet of one circular cooling radiator (10) is hydraulically connected to the inlet and respectively to the outlet of the other circular cooling radiator (10) by respective tubular channels formed in said outer casing (7).

13. Axial-flow electric machine according to claim 12, wherein the circular cooling radiator (10) comprises a larger face facing the outer face of said circular plate-shaped rotor (4), and comprises two connectors (10c) (10d), which are hydraulically connected to said inlet and outlet and are coupled into said tubular channels.

14. An axial-flow electric machine according to claim 12, wherein said stator support body (9) comprises an internal cooling circuit (21) formed by one or more internal channels extending in said stator support body (9) around said first reference axis (A) along said circumferential path (C), surrounding/along said stator seats (23), said circular cooling radiator (10) being hydraulically connected to the said internal cooling circuit (21) of said stator support body (9) so that the cooling fluid passes through the stator support body (9) and said circular cooling radiators (10) in series.
